# EUROPÄISCHE PATENTSCHRIFT

(11) **EP 2 957 876 B1**
(45) Veröffentlichungstag und Bekanntmachung des Hinweises auf die Patenterteilung: **08.03.2023**
(21) Anmeldenummer: 14172762.8
(22) Anmeldetag: 17.06.2014
(51) Int. Cl.: G01J 1/04

(54) **Baugruppe für einen optoelektronischen Sensor und Verfahren zu deren Herstellung**
Component for an optoelectronic sensor and method for its production
Bloc pour un capteur optoélectrique et son procédé de fabrication

(43) Veröffentlichungstag der Anmeldung: 23.12.2015
(73) Patentinhaber: Pepperl+Fuchs SE, 68307 Mannheim (DE)
(72) Erfinder: Levy, Carsten, 12305 Berlin (DE); Filler, Thomas, 12623 Berlin (DE)
(74) Vertreter: Schiffer, Axel Martin

(56) Entgegenhaltungen:
- EP-A2- 2 565 603
- US-A- 5 483 060
- US-A- 5 602 384
- US-A1- 2014 070 081
- US-A1- 2014 110 581

## Beschreibung

Die vorliegende Erfindung bezieht sich in einem ersten Aspekt auf ein Verfahren zur Herstellung einer Baugruppe für einen optoelektronischen Sensor nach dem Oberbegriff des Anspruchs 1.

Bei einem solchen, grundsätzlich bekannten Verfahren wird ein Baugruppenträger mit wenigstens einem optoelektronischen Bauelement bestückt, wobei das wenigstens eine optoelektronische Bauelement eine optisch wirksame Oberfläche aufweist.

Wichtige Beispiele optoelektronischer Bauelemente im Sinn der vorliegenden Erfindung sind einerseits optische Sender, also Halbleiterbauelemente, die aus elektrisch zugeführter Energie insbesondere sichtbares Licht erzeugen, insbesondere Leuchtdioden oder Laserdioden, und andererseits optische Empfänger oder Detektoren, insbesondere Fotowiderstände, Fotodioden oder Fototransistoren.

Optische Näherungsschalter, wie aus der EP 2 565 603 A2 oder aus der US 2014/0070081 A1 bekannt, weisen beispielsweise einen solchen optischen Sender und optischen Empfänger auf, welche typischerweise zur Erkennung und Messung des Abstandes von Objekten in der Nähe des Näherungsschalters dienen. Zur Veränderung des Lichtdurchlasses sind dabei Blenden in Ausbildung eines bedruckten oder beschichteten Deckglases vorgesehen.

US-5,602,384 offenbart eine Sensoranordnung, bei der vor einer lichtempfindlichen Fläche eine Blende angeordnet ist, die durch eine lichtundurchlässige Schicht gebildet wird. Zwischen der lichtempfindlichen Fläche und der lichtundurchlässigen Schicht befindet sich ein transparentes Substrat. In US-5,483,060 ist ein Bauelement mit einem Halbleiterchip beschrieben, der in einer transparenten Ummantelung aufgenommen ist. Auf die transparente Ummantelung ist eine Abdeckschicht aufgebracht, die als Blende wirkt.

US 2014/0110581 A1 offenbart einen Photosensor und ein Verfahren zum Nachweisen von einkommenden zu detektierendem Licht. Dabei ist auf einem Halbleitersubstrat ein Muster einer lichtundurchlässigen Schicht aufgebracht.

Die optisch wirksame Oberfläche solcher optoelektronischen Bauelemente weist, beispielweise für Anwendungen bei optischen Sensoren, typische Abmessungen in Länge und Breite von etwa 1mm auf, wobei auch größere oder kleinere Abmessungen vorkommen können.

In einem weiteren Aspekt bezieht sich die Erfindung auf eine Baugruppe für einen optoelektronischen Sensor nach dem Oberbegriff des Anspruchs 9. Außerdem bezieht sich die Erfindung auf einen optoelektronischen Sensor mit einer solchen Baugruppe.

Bei vielen Anwendungen optoelektronischer Bauelemente oder optoelektronischer Sensoren ist es von Vorteil, wenn die effektive Größe, Form und/oder Position (d.h. nach Lage und/oder Ausrichtung) der optisch wirksamen Fläche wenigstens eines optoelektronischen Bauelements auf möglichst einfache Weise den spezifischen Anforderungen solcher Anwendungen dieser Erzeugnisse angepasst werden kann. Ist beispielsweise der Strahlquerschnitt des Sendelichts verhältnismäßig groß, dann kann die sichere Erkennung insbesondere kleiner Objekte im Überwachungsbereich hierdurch beeinträchtigt werden. Bei anderen Anwendungen wie beispielsweise beim Aufbau von Lichtschranken, die eine Unterscheidung zwischen Objekten im Nahbereich (insbesondere im Tastbereich) und im Fernbereich (insbesondere im Hintergrund) ermöglichen sollen, ist eine möglichst genaue Positionierung der optisch wirksamen Fläche wenigstens eines optoelektronischen Bauelements von entscheidender Bedeutung für die bestimmungsgemäße Funktion der Lichtschranke.

Eine Aufgabe der Erfindung ist es, Erzeugnisse der genannten Art zu verbessern und ein verbessertes Verfahren zu deren Herstellung zu schaffen.

Diese **Aufgabe** wird nach einem ersten Aspekt der Erfindung durch das Verfahren zur Herstellung einer Baugruppe für einen optoelektronischen Sensor mit den Merkmalen des Anspruchs 1 gelöst.

Nach einem weiteren Aspekt der Erfindung wird die Aufgabe durch eine Baugruppe für einen optoelektronischen Sensor mit den Merkmalen des Anspruchs 9 gelöst.

Bevorzugte Varianten des erfindungsgemäßen Verfahrens sowie vorteilhafte Ausführungsbeispiele erfindungsgemäßer Erzeugnisse sind Gegenstand der abhängigen Ansprüche.

Das Verfahren der oben genannten Art ist erfindungsgemäß dadurch gekennzeichnet, dass durch Aufbringen einer wenigstens teilweise lichtundurchlässigen Schicht auf Teilbereiche der optisch wirksamen Oberfläche des optoelektronischen Bauelements wenigstens eine Blende gebildet wird.

Als ein wesentlicher Vorteil des erfindungsgemäßen Verfahrens kann angesehen werden, dass insbesondere die effektive Größe, Form und/oder Position der optisch wirksamen Fläche wenigstens eines optoelektronischen Bauelements auf möglichst einfache Weise den spezifischen Anforderungen unterschiedlicher Anwendungen dieses Erzeugnisses angepasst werden kann.

Die wenigstens teilweise lichtundurchlässige Schicht ist vorzugsweise eine opake Schicht und/oder eine für bestimmte Spektralbereiche oder Polarisationen des Lichtes ganz oder teilweise undurchlässige Schicht.

Die Baugruppe für einen optoelektronischen Sensor ist erfindungsgemäß dadurch weitergebildet, dass die wenigstens eine optisch wirksame Oberfläche bereichsweise von einer wenigstens teilweise lichtundurchlässigen Schicht derart verdeckt ist, dass durch die wenigstens teilweise lichtundurchlässige Schicht auf der optisch wirksamen Oberfläche wenigstens eine Blende gebildet ist.

Wichtige Beispiele optoelektronischer (oder auch kurz: optischer) Bauelemente im Sinne der vorliegenden Erfindung sind optische Sender, also Halbleiterbauelemente, die aus elektrisch zugeführter Energie insbesondere sichtbares Licht erzeugen, insbesondere Leuchtdioden oder Laserdioden und optische Empfänger (oder Detektoren), insbesondere Fotowiderstände, Photodioden oder Fototransistoren.

Unter der optisch wirksamen Oberfläche eines optoelektronischen Bauelements soll im Zusammenhang mit der Beschreibung der vorliegenden Erfindung der - vor dem Aufbringen der wenigstens teilweise lichtundurchlässigen Schicht - Licht emittierende Teil der Oberfläche eines optischen Senders oder der an der Umwandlung von Licht in ein elektrisches Signal beteiligte Teil der Oberfläche eines optischen Empfängers (Detektors) verstanden werden. Entsprechend soll unter der optisch effektiv wirksamen Oberfläche eines optoelektronischen Bauelements der - nach dem Aufbringen der wenigstens teilweise lichtundurchlässigen Schicht - Licht emittierende Teil der Oberfläche eines optischen Senders oder der an der Umwandlung von Licht in ein elektrisches Signal beteiligte Teil der Oberfläche eines optischen Empfängers (Detektors) verstanden werden.

Die wenigstens teilweise lichtundurchlässige Schicht wird vorzugsweise im Anschluss an die Bestückung des Baugruppenträgers, der vorzugsweise eine Platine oder eine Folie ist, mit dem wenigstens einen optoelektronischen Bauelement auf Teilbereiche der optisch wirksamen Oberfläche des optoelektronischen Bauelements aufgebracht, weil hierdurch eine Positionierung der dabei ausgebildeten Blenden mit der Genauigkeit der verwendeten Beschichtungstechnik, vorzugsweise einer Drucktechnik oder einer photolithographischen Technik, möglich ist. Auf diese Weise können Fertigungstoleranzen bei der relativ ungenauen Platzierung der Bauelemente im Rahmen der Bestückung durch die sich anschließende wesentlich genauere Beschichtung kompensiert werden.

Die wenigstens teilweise lichtundurchlässige Schicht ist je nach Ausführungsform der Erfindung vorzugsweise für unterschiedliche Spektralbereiche des von einem optischen Sender ausgesandten Lichtes in unterschiedlichem Grade durchlässig oder für alle Spektralbereiche in gleicher Weise teilweise oder vollständig undurchlässig. Zum Ausbilden derartiger Schichten eignen sich insbesondere solche wenigstens teilweise lichtundurchlässigen, also Licht reflektierenden oder Licht absorbierenden Materialien, die auf den optisch wirksamen Oberflächen optoelektronischer Bauelemente gut haften. Dabei bieten die Licht absorbierenden Materialien den Vorteil, dass sie im Gegensatz zu Licht reflektierenden Materialien nicht Ausgangspunkt störender Streustrahlung sind.

Bevorzugte Ausführungsformen der Erfindung sehen vor, dass die wenigstens teilweise lichtundurchlässige Schicht durch ein Druckverfahren, insbesondere aber nicht notwendig durch ein berührungsloses Druckverfahren, aufgebracht wird. Ein Beispiel für ein nicht berührungsloses Druckverfahren im hier verwendeten Sinn des Begriffes ist das sogenannte Siebdruckverfahren. Für diesen Zweck haben sich in Versuchsreihen insbesondere solche Druckverfahren als besonders geeignet erwiesen, die ohne eine sogenannte Druckform, also beispielsweise einen Druckzylinder oder einen Druckstempel auskommen, weil mit solchen Druckverfahren Bauelemente für unterschiedliche Sensoren auch in kleinsten Stückzahlen kostengünstig gefertigt werden können. Diese Druckverfahren werden auch als Non Impact Printing (NIP) Verfahren bezeichnet. Zu diesen Verfahren gehören neben dem Laserdruck, den fotographischen Verfahren und der Ionographie vor allem auch der Tintenstrahldruck, der sich seinerseits in die sogenannten Continuous Ink Jet (CIJ) Verfahren und in die Drop und Demand (DoD)Verfahren untergliedern lässt.

Mit diesen Verfahren ist insbesondere die berührungslose drucktechnische Aufbringung nicht nur von Tinten, sondern auch von anderen Materialien wie beispielsweise Wachsen, Harzen, Polymeren oder Lacken, die für einen gewünschten Spektralbereich ganz oder teilweise undurchlässig sind oder als spektrale Filter oder als Polarisatoren wirken, auf die optisch wirksamen Oberflächen optoelektronischer Bauelemente und auch auf Flächen in der Umgebung der optisch wirksamen Oberflächen optoelektronischer Bauelemente auf Baugruppenträgern wie insbesondere Platinen oder Folien in einer Weise möglich, die eine Ausbildung definierter Blendenstrukturen mit hoher Ortsauflösung und mit entsprechend scharfen Randstrukturen ermöglicht. Diese können als Farbdetektoren oder zur Analyse der Polarisation des verwendeten Lichtes dienen. Versuche haben gezeigt, dass nicht mit thermischen Problemen durch derartige Beschichtungen zu rechnen ist, insbesondere dann nicht, wenn diese Beschichtungen ausreichend wärmeleitfähig sind und Wärmestrahlen nicht zu sehr reflektieren.

Eine weitere Klasse von berührungslosen Druckverfahren, die im Zusammenhang mit einigen Ausführungsformen der Erfindung geeignet erscheinen, sind die sogenannten Aerosoldruckverfahren, die beispielsweise in der WO 2010/089081 A1 oder in der WO 2013/153158 A1 beschrieben sind.

Andere bevorzugte Ausführungsformen der Erfindung sehen vor, dass die wenigstens teilweise lichtundurchlässige Schicht durch einen lithographischen, insbesondere photolithographischen (oder fotolithografischen) Prozess aufgebracht wird. Hierzu wird zunächst ein lichtempfindlicher Lack, der sogenannte Fotolack, auf die zu beschichtenden Bereiche aufgebracht, der anschließend bereichsweise mit Licht einer Frequenz oder mit einem Spektrum belichtet wird, welches eine chemische Reaktion in dem Fotolack katalysiert oder inhibiert. Je nach Art des verwendeten Fotolacks werden die derart belichteten oder nicht belichteten Bereiche des Fotolacks anschließend entfernt. Die nicht entfernten Bereiche des Fotolacks bilden dann die zu erzeugende wenigstens teilweise lichtundurchlässige Schicht.

Auch mit solchen photolithographischen Verfahren ist das Aufbringen, insbesondere das berührungslose drucktechnische Aufbringen, von wenigstens teilweise lichtundurchlässigen Materialien auf die optisch wirksamen Oberflächen optoelektronischer Bauelemente und auch auf Flächen in der Umgebung der optisch wirksamen Oberflächen optoelektronischer Bauelemente auf Baugruppenträgern wie insbesondere Platinen oder Folien in einer Weise möglich, die eine Ausbildung definierter Blendenstrukturen mit hoher Ortsauflösung und mit entsprechend scharfen Randstrukturen ermöglicht.

Einige Ausführungsformen der Erfindung sehen vor, dass der Baugruppenträger mit wenigstens einem ersten optoelektronischen Bauelement und einem zweiten optoelektronischen Bauelement bestückt wird, wobei das erste optoelektronische Bauelement ein optischer Sender und das zweite optoelektronische Bauelement ein optischer Empfänger, insbesondere für von dem optischen Sender ausgesandtes Licht, ist, und dass auf der optisch wirksamen Oberfläche des optischen Senders eine Blende gebildet wird und/oder dass auf der optisch wirksamen Oberfläche des Empfängers eine Blende gebildet wird. Insbesondere bei diesen Ausführungsformen der Erfindung, bei denen ein Sender und ein Empfänger auf demselben Baugruppenträger platziert und anschließend in einem anschließenden Prozessschritt beschichtet werden, kann durch Verwendung einer Drucktechnik oder einer anderen Beschichtungstechnik mit hoher Auflösung eine hochpräzise Anordnung der effektiv wirksamen (aktiven, nicht beschichteten) optisch wirksamen Oberflächen auch bei relativ ungenau gesetzten Bauelementen erreicht werden.

Sofern hierdurch die Anforderungen der jeweiligen Anwendung in vorteilhafter Weise unterstützt werden, können vorzugsweise auf der optisch wirksamen Oberfläche des optischen Senders und der optisch wirksamen Oberfläche des Empfängers jeweils Blenden gleicher Form, insbesondere kreisförmige, quadratische oder schlitzförmige oder streifenförmige Blenden vorzugsweise gleicher Ausrichtung gebildet werden. Typische bevorzugte Blendenformen sind beispielsweise kreisförmige Blenden mit ca. 100 µ Durchmesser und mit einer Randbreite oder Auflösung von ca. 5 µ. Zur Detektion von Drähten, insbesondere des Vorhandenseins oder der Position von möglichweise abgerissenen Drähten, ist bei einigen Anwendungen eine streifenförmige Lichtquelle, d.h. eine Lichtquelle, deren optisch wirksame Oberfläche eine streifenförmige Blende aufweist, vorteilhaft, wobei die breite des Streifens vorzugsweise dem Drahtdurchmesser entspricht. Besonders vorteilhaft ist es bei diesen Anwendungen, wenn der optische Empfänger für das von dieser Lichtquelle ausgesandte Licht eine streifenförmige Blende gleicher Größe, Form, und/oder Orientierung aufweist. Je nach Ausführungsform der vorliegenden Erfindung kann die Blendenform und damit die Form der effektiv optisch wirksamen Fläche einer Lichtquelle oder eines optischen Empfängers jede gewünschte Form annehmen, wodurch auch Linsenanordnungen, beispielsweise Zylinderlinsen zur Erzeugung von bandförmigen Strahlprofilen auf kreisförmigen Strahlprofilen ganz oder teilweise entbehrlich werden.

Die vorliegende Erfindung ermöglicht allgemein eine Anpassung der Blendenform und/oder der Blendengröße und/oder der Blendenposition an eine mit einem erfindungsgemäßen Erzeugnis zu lösende Messaufgabe.

Um störende Reflexionen oder Streulichteinflüsse durch lichtreflektierende Bereiche außerhalb der optisch wirksamen Oberflächen der optoelektronischen Bauelemente zu vermeiden oder zu reduzieren, sieht die Erfindung vor, dass auch auf Bereiche außerhalb der optisch wirksamen Oberflächen der optoelektronischen Bauelemente, vorzugsweise auf lichtreflektierende Bereiche außerhalb der optisch wirksamen Oberflächen der optoelektronischen Bauelemente, eine wenigstens teilweise lichtundurchlässige Schicht aufgebracht wird. Es wird also nicht nur die Chip-Oberfläche optoelektronischer Bauelemente "eingeschwärzt", d.h. von einer wenigstens teilweise lichtundurchlässigen Schicht verdeckt oder mit dieser beschichtet, sondern es wird insbesondere auch der ganze Goldbereich, der sich häufig in der Umgebung der Chips befindet und vorzugsweise auch in der Umgebung der Chips angeordnete Golddrähte oder andere in der Umgebung der Chips befindliche potentielle Licht-Reflektoren von einer wenigstens teilweise lichtundurchlässigen Schicht verdeckt oder mit dieser beschichtet.

Dabei wird die Lage, Form und/oder Größe der Blende so gewählt, dass die Bondflecken, also die Kontaktflecken der Bonddrähte auf dem Chip vorzugsweise außerhalb des von der Blende frei (d.h. lichtdurchlässig) gelassenen Bereichs liegen. Auf diese Weise wird durch diese Ausführungsformen der Erfindung der Einsatz sogenannter Flip-Chip-Sender, also von LED-Chips mit seitlich oder nach unten abgeführten Anschlüssen entbehrlich.

Weiter wird die Position der wenigstens einen Blende relativ zu dem Baugruppenträger, insbesondere zu Außenkanten des Baugruppenträgers, ausgerichtet.

Vorzugsweise wird das Druckverfahren oder ein anderes Verfahren zur Aufbringung der wenigstens teilweise lichtundurchlässigen Schicht zu diesem Zweck nach der Bestückung des Baugruppenträgers mit dem optoelektronischen Bauelement oder mit den optoelektronischen Bauelementen relativ zu dem Baugruppenträger, vorzugsweise relativ zu dessen Kanten positioniert. Auf diese Weise wird eine Positionierung der Blenden und damit der effektiv optisch wirksamen Flächen relativ zu dem Baugruppenträger bzw. zu den Kanten des Baugruppenträgers und/oder der Blenden relativ zueinander mit der Genauigkeit des jeweils verwendeten Verfahrens, insbesondere des jeweils verwendeten Druckverfahrens, zur Aufbringung der wenigstens teilweise lichtundurchlässigen Schicht ermöglicht, auch wenn die Platzierung der optoelektronischen Bauelemente auf dem Baugruppenträger im Rahmen der Bestückung nur mit einer wesentlich geringeren Genauigkeit (d.h. Ortsauflösung) möglich ist. Je nach dem verwendeten Verfahren zur Aufbringung der wenigstens teilweise lichtundurchlässigen Schicht wird durch entsprechende Ausführungsformen der Erfindung auf diese Weise eine Justage der effektiv optisch wirksamen Flächen von optischen Komponenten auf einem Baugruppenträger, insbesondere auf einer Leiterplatte, mit einer Genauigkeit von (Bruchteilen von) wenigen µ oder gar einigen 10 nm möglich.

Eine möglichst genaue Positionierung der Blende oder der Blenden relativ zum Baugruppenträger, insbesondere zu dessen Kanten oder der Blenden relativ zu einander ist nicht nur bei Abstandsmessungen, insbesondere durch eine sogenannte Triangulation, vorteilhaft, sondern u.a. auch bei Anwendungen, bei denen die Position (d.h. die Lage und/oder Orientierung) von drahtförmigen Objekten oder von Objektkanten, beispielsweise der Kanten eines Papierstapels, bestimmt werden soll.

Erfindungsgemäß ist ferner eine Baugruppe für einen optoelektronischen Sensor mit einem Baugruppenträger, insbesondere einer Platine vorgesehen, die mit wenigstens einem optoelektronischen Bauelement bestückt ist, wobei das wenigstens eine optoelektronische Bauelement eine optisch wirksame Oberfläche aufweist, und wobei die wenigstens eine optisch wirksame Oberfläche bereichsweise von einer wenigstens teilweise lichtundurchlässigen Schicht derart verdeckt ist, dass durch die wenigstens teilweise lichtundurchlässige Schicht auf der optisch wirksamen Oberfläche wenigstens eine Blende gebildet ist.

Vorzugsweise ist der Baugruppenträger mit wenigstens einem ersten optoelektronischen Bauelement und einem zweiten optoelektronischen Bauelement bestückt, wobei das erste optoelektronische Bauelement ein optischer Sender und das zweite optoelektronische Bauelement ein optischer Empfänger, insbesondere für von dem optischen Sender ausgesandtes Licht, ist, und wobei auf der optisch wirksamen Oberfläche des optischen Senders eine Blende gebildet ist und/oder wobei auf der optisch wirksamen Oberfläche des Empfängers eine Blende gebildet ist.

Besonders vorzugsweise weisen das erste optoelektronische Bauelement und das zweite optoelektronische Bauelement jeweils Blenden gleicher Form auf.

Einige Ausführungsformen der Erfindung sehen vor, dass auch Bereiche außerhalb der optisch wirksamen Oberflächen der optoelektronischer Bauelemente, vorzugsweise lichtreflektierende Bereiche, mit einer teilweise lichtundurchlässigen Schicht abgedeckt sind.

Erfindungsgemäß ist auch ein optoelektronischer Sensor mit einer Baugruppe gemäß einer Ausführungsform der vorliegenden Erfindung vorgesehen. Vorzugsweise weist ein solcher Sensor einen optischen Sender und einen optischen Empfänger auf, die gemeinsam auf einer Baugruppe, vorzugsweise auf eine Platine oder einer Folie, angeordnet sind.

Die vorliegende Erfindung ermöglicht je nach gewählter Ausführungsform insbesondere die Realisierung folgender vorteilhafter Wirkungen:
Die optisch wirksamen Flächen von Sendelichtquellen und/oder Empfangsbauelementen können in Größe, Form und/oder Position (d.h. nach Lage und/oder Ausrichtung) entsprechend den speziellen Anforderungen der jeweils gewählten Anwendungen gestaltet werden. Die Größe der Lichtquellen kann so gestaltet werden, dass für präzise optische Sensoren erforderliche Strahlengänge realisiert werden können.

Störende Auswirkungen eines etwa auf der optisch wirksamen Fläche eines Bauelements vorhandenen Bondflecks können vermieden oder reduziert werden, vorzugsweise durch eine geeignete Gestaltung der Größe, Form und/oder Position (d.h. nach Lage und/oder Ausrichtung) der Blende oder der Blenden, so dass der Bondfleck außerhalb der optisch effektiv wirksamen Fläche liegt.

Teure Sonderbauelemente wie mechanische Blenden direkt auf dem Chip eins optoelektronischen Bauelements wie beispielsweise aufgeklebte Metallblenden oder mechanische Blenden in Gehäuseteilen, beispielsweise im Optikbus, vor den optoelektronischen Bauelementen, die häufig in großem Abstand zu optisch wirksamen Flächen angeordnet und deshalb mit einer schlechten optischen Abbildungsqualität verbunden sind und/oder störendes Streulicht verursachen, sind je nach gewählter Ausführungsform der Erfindung genauso entbehrlich wie die Verwendung spezieller, insbesondere teurer Bauelemente wie Punktlichtquellen mit oft geringer optischer Strahlungsleistung oder Flip-Chip-Sender, bei denen häufig nicht das optimale Grundmaterial zur Verfügung steht oder verwendet wird.

Je nach gewählter Ausführungsform ermöglicht die vorliegende Erfindung insbesondere die Erzeugung einer kleinen und homogenen Lichtfleckabbildung ohne Bondschatten, die nahezu beliebige Anpassung der optisch effektiv wirksamen Flächen an die speziellen Anforderungen verschiedener Sensortypen, Sensorprinzipien und/oder Messverfahren und eine präzise Positionierung der optisch effektiv wirksamen Flächen optischer Bauelemente trotz bisweilen hoher Setztoleranzen der Bauelemente im Bestückungsprozess.

Gemäß der Erfindung werden diese Vorteile erreicht durch Aufbringen einer opaken Schicht direkt auf die Oberfläche eines optischen Bauelementes wie beispielsweise eines Sendediodenchips, vorzugsweise mit insbesondere berührungslosen Druckverfahren wie beispielsweise einem Ink Jet Verfahren oder mit einem Aerosoldruckverfahren. Dabei werden vorzugsweise alle nicht genutzten optisch wirksamen Flächen und vorzugsweis auch alle potentiell störenden passiven Flächen wie beispielsweise das Licht reflektierende Bereiche auf dem Baugruppenträger oder in der Umgebung der optisch wirksamen Flächen abgedeckt. Hierdurch wird die Möglichkeit geschaffen, nahezu beliebige optische Bauteile mit ausreichend großer oder ausreichend kleiner optisch wirksamen Fläche an die speziellen Anforderungen unterschiedlicher optischer Sensoren anzupassen.

Das erfindungsgemäße Verfahren kann als "in-line process" ausgestaltet werden, d.h. es ist eine variable Gestaltung der Größe, Form und/oder Position (d.h. nach Lage und/oder Ausrichtung) der Blende oder der Blenden möglich, vorzugsweise in Anhängigkeit von der Artikelnummer, der benötigten optischen Leistung oder in Abhängigkeit von dem eingesetzten optischen Prinzip. Insbesondere ist eine beliebige Lichtfleckgeometrie beim Sender und/oder eine beliebige Blendengeometrie beim Empfänger möglich.

Die Ergebnisse sind weitgehend unabhängig von den verwendeten Bauelementen, da die optisch relevanten Eigenschaften der erfindungsgemäß beschichteten Bauelemente durch die Beschichtung festgelegt werden, wodurch preiswerte Bauelemente verwendet werden können, die jeweils dem neuesten Stand der Technik entsprechen. Hierdurch wird insbesondere die Auswahl von Technologien einfacher, für die mehr als nur ein Lieferant ("second source") zur Verfügung steht.

Bei Ausführungsformen der Erfindung, bei denen ein Sender und ein Empfänger auf demselben Baugruppenträger angeordnet werden, ist eine hochpräzise relative Positionierung der Blenden von Sender und Empfänger möglich.

Weitere Vorteile und Merkmale der Erfindung werden nachstehend mit Bezug auf die beigefügten schematischen Figuren erläutert. Hierin zeigen:

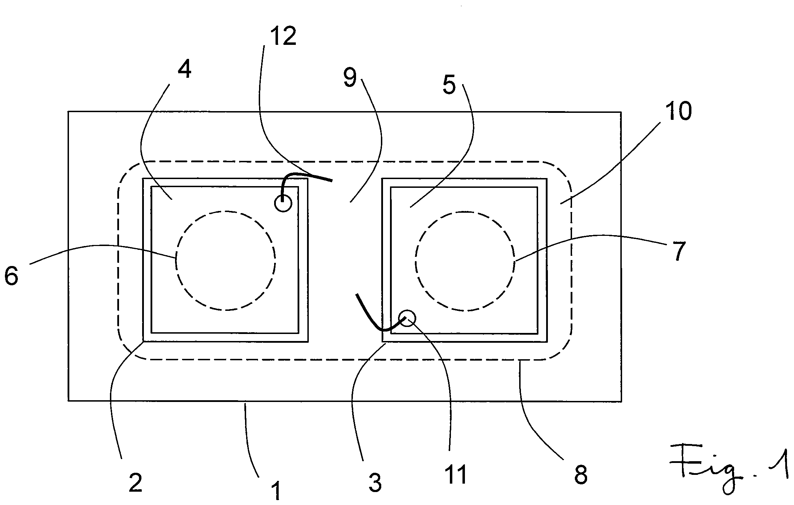

Fig. 1 eine schematische Darstellung eines Ausführungsbeispiels einer erfindungsgemäßen Baugruppe.

Das in Figur 1 schematische dargestellte Ausführungsbeispiel einer erfindungsgemäßen Baugruppe weist als wesentliche Komponenten einen Baugruppenträger 1 auf, der vorzugsweise in Form einer Platine ausgestaltet ist, aber auch als Folie oder in anderer Weise ausgeführt sein. Auf dem Baugruppenträger 1 sind in diesem Ausführungsbeispiel der Erfindung zwei optoelektronische Bauelemente 2, 3 angeordnet, nämlich ein erstes optoelektronisches Bauelement 2 mit der optisch wirksamen Oberfläche 4 und ein zweites optoelektronisches Bauelement 3 mit der optisch wirksamen Oberfläche 5.

In diesem Ausführungsbeispiel ist das erste optoelektronische Bauelement (2) ein optischer Sender und das zweite optoelektronische Bauelement (3) ein optischer Empfänger für von dem optischen Sender ausgesandtes Licht. Die erste Blende 6 auf der optisch wirksamen Oberfläche 4 des ersten optoelektronischen Bauelements 2, eine in diesem Ausführungsbeispiel kreisförmig geformte Ausnehmung 6 in der wenigstens teilweise lichtundurchlässigen Schicht 8, definiert somit die effektive Größe, Form und Position der Licht aussendenden Fläche innerhalb der optisch wirksamen Oberfläche 4 des optischen Senders 2. In entsprechender Weise definiert die zweite Blende 7 auf der optisch wirksamen Oberfläche 5 des zweiten optoelektronischen Bauelements 3, eine in diesem Ausführungsbeispiel kreisförmig geformte Ausnehmung 7 in der wenigstens teilweise lichtundurchlässigen Schicht 8, die effektive Größe, Form und Position der Licht empfangenden Fläche innerhalb der optisch wirksamen Oberfläche 5 des optischen Empfängers 3.

Die wenigstens teilweise lichtundurchlässige Schicht 8 erstreckt sich in diesem Ausführungsbeispiel - mit Ausnahme der Blenden 6 und 7 - über beide Bauelemente 2 und 3 und zusätzlich über Bereiche 9 und 10 außerhalb der optisch wirksamen Oberflächen der Bauelemente 2 und 3.

Auf diese Weise erstreckt sich in diesem Ausführungsbeispiel die wenigstens teilweise lichtundurchlässige Schicht 8 auch über die innerhalb der optisch wirksamen Oberflächen lokalisierten Bondkontakte oder Bondflecken 11 und auch über die wenigstens teilweise innerhalb der optisch wirksamen Oberflächen lokalisierten Bonddrähte 12, mit deren Hilfe die Bauelemente 2 und 3 kontaktiert sind.

### Bezugszeichen

- 1: Baugruppenträger
- 2: erstes Bauelement
- 3: zweites Bauelement
- 4: optisch wirksame Oberfläche des ersten Bauelements
- 5: optisch wirksame Oberfläche des zweiten Bauelements
- 6: erste Blende
- 7: zweite Blende
- 8: teilweise lichtundurchlässige Schicht
- 9, 10: Bereiche außerhalb der optisch wirksamen Oberflächen
- 11: Bondkontakt
- 12: Bonddraht

## Patentansprüche

1. Verfahren zur Herstellung einer Baugruppe für einen optoelektronischen Sensor,
bei dem ein Baugruppenträger (1) mit wenigstens einem optoelektronischen Bauelement (2, 3) bestückt wird, wobei das wenigstens eine optoelektronische Bauelement (2, 3) eine optisch wirksame Oberfläche (4, 5) aufweist,
wobei die optisch wirksame Oberfläche (4, 5) des optoelektronischen Bauelements der lichtemittierende Teil der Oberfläche eines optischen Senders (2) oder der an der Umwandlung von Licht in ein elektrisches Signal beteiligte Teil der Oberfläche eines optischen Empfängers (3) ist,
wobei durch Aufbringen einer wenigstens teilweise lichtundurchlässigen Schicht (8) auf Teilbereiche der optisch wirksamen Oberfläche (4, 5) des optoelektronischen Bauelements (2, 3) wenigstens eine Blende (6, 7) gebildet wird,
**dadurch gekennzeichnet,**
**dass** die Position der wenigstens einen Blende (6, 7) relativ zu dem Baugruppenträger (1) ausgerichtet wird und
**dass** die wenigstens teilweise lichtundurchlässige Schicht (8) sich auf einen Bondkontakt (11), der an der optisch wirksamen Fläche (4, 5) vorhanden ist, und wenigstens teilweise auf einen Bonddraht (12) erstreckt, der an dem Bondkontakt (11) elektrisch kontaktierend angebracht ist.

2. Verfahren nach Anspruch 1,
**dadurch gekennzeichnet,**
**dass** die wenigstens teilweise lichtundurchlässige Schicht (8) durch ein Druckverfahren, vorzugsweise durch ein berührungsloses Druckverfahren, aufgebracht wird.

3. Verfahren nach Anspruch 1,
**dadurch gekennzeichnet,**
**dass** die wenigstens teilweise lichtundurchlässige Schicht durch einen lithographischen, insbesondere durch einen photolithographischen, Prozess aufgebracht wird.

4. Verfahren nach einem der Ansprüche 1 bis 3,
**dadurch gekennzeichnet,**
**dass** der Baugruppenträger mit wenigstens einem ersten optoelektronischen Bauelement (2) und einem zweiten optoelektronischen Bauelement (3) bestückt wird,
wobei das erste optoelektronische Bauelement (2) ein optischer Sender und das zweite optoelektronische Bauelement (3) ein optischer Empfänger, insbesondere für von dem optischen Sender ausgesandtes Licht, ist, und dass auf der optisch wirksamen Oberfläche (4) des optischen Senders eine Blende (6) gebildet wird und/oder
**dass** auf der optisch wirksamen Oberfläche des Empfängers eine Blende (7) gebildet wird.

5. Verfahren nach Anspruch 4,
**dadurch gekennzeichnet,**
**dass** auf der optisch wirksamen Oberfläche (4) des optischen Senders und der optisch wirksamen Oberfläche des Empfängers jeweils Blenden (6, 7) gleicher Form gebildet werden.

6. Verfahren nach einem der Ansprüche 1 bis 5,
**dadurch gekennzeichnet**,
bei dem auch auf Bereiche (9, 10) außerhalb der optisch wirksamen Oberflächen der optoelektronischen Bauelemente (2, 3), vorzugsweise auf lichtreflektierende Bereiche, eine wenigstens teilweise lichtundurchlässige Schicht aufgebracht wird.

7. Verfahren nach einem der Ansprüche 1 bis 6,
**dadurch gekennzeichnet**,
bei dem die Position der wenigstens einen Blende (6, 7) relativ zu Außenkanten des Baugruppenträgers (1) ausgerichtet wird.

8. Verfahren nach einem der Ansprüche 1 bis 7,
**dadurch gekennzeichnet,**
**dass** der Baugruppenträger (1) eine Platine (1) ist.

9. Baugruppe für einen optoelektronischen Sensor
mit einem Baugruppenträger (1), insbesondere einer Platine, die mit wenigstens einem optoelektronischen Bauelement (2, 3) bestückt ist, wobei das wenigstens eine optoelektronische Bauelement (2, 3) eine optisch wirksame Oberfläche (4, 5) aufweist,
wobei die optisch wirksame Oberfläche (4, 5) des optoelektronischen Bauelements der lichtemittierende Teil der Oberfläche eines optischen Senders (2) oder der an der Umwandlung von Licht in ein elektrisches Signal beteiligte Teil der Oberfläche eines optischen Empfängers (3) ist,
wobei die wenigstens eine optisch wirksame Oberfläche (4, 5) bereichsweise von einer wenigstens teilweise lichtundurchlässigen Schicht (8) derart verdeckt ist, dass durch die wenigstens teilweise lichtundurchlässige Schicht (8) auf der optisch wirksamen Oberfläche wenigstens eine Blende (6, 7) gebildet ist,
**dadurch gekennzeichnet,**
**dass** die wenigstens teilweise lichtundurchlässige Schicht (8) sich auf einen Bondkontakt (11), der an der optisch wirksamen Fläche (4, 5) vorhanden ist, und wenigstens teilweise auf einen Bonddraht (12) erstreckt, der an dem Bondkontakt (11) elektrisch kontaktierend angebracht ist.

10. Baugruppe nach Anspruch 9,
**dadurch gekennzeichnet,**
**dass** der Baugruppenträger mit wenigstens einem ersten optoelektronischen Bauelement (2) und einem zweiten optoelektronischen Bauelement (3) bestückt ist, wobei das erste optoelektronische Bauelement (2) ein optischer Sender und das zweite optoelektronische Bauelement (3) ein optischer Empfänger, insbesondere für von dem optischen Sender ausgesandtes Licht, ist, und
**dass** auf der optisch wirksamen Oberfläche (4) des optischen Senders eine Blende (6) gebildet ist und/oder
**dass** auf der optisch wirksamen Oberfläche des Empfängers eine Blende (7) gebildet ist.

11. Baugruppe nach Anspruch 10,
**dadurch gekennzeichnet,**
**dass** das ersten optoelektronische Bauelement (2) und das zweite optoelektronische Bauelement (3) jeweils Blenden (6, 7) gleicher Form aufweisen.

12. Baugruppe nach einem der Ansprüche 9 bis 11,
**dadurch gekennzeichnet,**
**dass** auch Bereiche (9, 10) außerhalb der optisch wirksamen Oberflächen der optoelektronischer Bauelemente, vorzugsweise lichtreflektierende Bereiche, mit einer teilweisen lichtundurchlässigen Schicht abgedeckt sind.

13. Optoelektronischer Sensor mit einer Baugruppe nach einem der Ansprüche 9 bis 12.

## Claims

1. Method for manufacturing an assembly for an optoelectronic sensor,
wherein an assembly carrier (1) is being equipped with at least one optoelectronic component (2, 3), the at least one optoelectronic component (2, 3) having an optically active surface (4, 5),
wherein the optically active surface (4, 5) of the optoelectronic component is the light emitting portion of the surface of an optical transmitter (2) or the portion of the surface of an optical receiver (3) participating in the transformation of light into an electric signal,
wherein, by applying of an at least partially opaque layer (8) on portions of the optically active surface (4, 5) of the optoelectronic component (2, 3) at least one stop (6, 7) is formed,
**characterized in,**
**that** the position of the at least one stop (6, 7) in relation to the at least one stop (6, 7) is being aligned in relation to the assembly carrier (1) and
**that** the at least partially opaque layer (8) extends on a bond contact (11) being present at the optically active surface (4, 5) and extends at least partially on a bond wire (2) being electrically contacting attached to the bond contact (11).

2. Method according to claim 1,
**characterized in**
**that** the at least partially opaque layer (8) is applied by a printing method, preferably by a contact-free printing method.

3. Method according to claim 1,
**characterized in**
**that** the at least partially opaque layer is applied by a lithographic, particularly by a photo-lithographic, process.

4. Method according to one of the claims 1 to 3,
**characterized in**
**that** the assembly carrier is being equipped with at least a first optoelectronic component (2) and a second optoelectronic component (3),
wherein the first optoelectronic component (2) is an optical transmitter and the second optoelectronic component (3) is an optical receiver, in particular for light emitted by the optical transmitter, and
**that** a stop (6) is formed on the optically active surface (4) of the optical transmitter and/or
**that** a stop (7) is formed on the optically active surface of the receiver.

5. Method is according to claim 4,
**characterized in**
**that** on the optically active surface (4) of the optical transmitter and the optically active surface of the receiver stops in each case, stops (6, 7) having the same form are being informed.

6. Method according to one of the claims 1 to 5,
**characterized in**
an at least partially opaque layer is being applied also on regions (9, 10) beyond the optically active surfaces of the optoelectronic components (2, 3), preferably on light reflecting regions.

7. Method according to one of the claims 1 to 6,
**characterized in**
**that** the position of the at least one stop (6, 7) is being aligned in relation to peripheral edges of the assembly carrier (1).

8. Method according to one of the claims 1 to 7,
**characterized in**
**that** the assembly carrier (1) is a printed circuit board (1).

9. Assembly for an optoelectronic sensor
having an assembly carrier (1), in particular a printed circuit board, which is equipped with at least one optoelectronic component (2, 3), wherein the at least one optoelectronic component (2, 3) has an optically active surface (4, 5),
wherein the optically active surface (4, 5) of the optoelectronic component is the light emitting portion of the surface of an optical transmitter (2) or the portion of the surface of an optical receiver (3) participating in the transformation of light into an electric signal,
wherein regions of the at least one optically active surface (4, 5) are covered by an at least partially opaque layer (8) in such a way that through the at least partially opaque layer (8) at least one stop (6, 7) is formed on the optically active surface,
**characterized in**
**that** the at least partially opaque layer (8) extends to a bond contact (11) being present at the optically active surface (4, 5) and extends at least partially to a bond wire (12) which is electrically contacting attached to the bond contact (11).

10. Assembly according to claim 9,
**characterized in**
**that** the assembly carrier is equipped with at least one first optoelectronic component (2) and a second optoelectronic component (3), wherein the first optoelectronic component (2) is an optical transmitter and the second optoelectronic component (3) is an optical receiver, in particular for light transmitted by the optical transmitter, and
**that** on the optically active surface (4) of the optical transmitter a stop (6) is formed and/or on the optically active surface of the receiver a stop (7) is formed.

11. Assembly according to claim 10,
**characterized in**
**that** the first optoelectronic component (2) and the second optoelectronic component (3) in each case, have stops (6, 7) having the same form.

12. Assembly according to one of the claims 9 to 11,
**characterized in**
**that** also regions (9, 10) beyond the optically active surfaces of the optoelectronic components, in particular light reflecting regions, are covered by the at least partially opaque layer.

13. Optoelectronic sensor having an assembly according to one of the claims 9 to 12.

## Revendications

1. Procédé pour fabriquer un module pour un capteur optoélectronique,
selon lequel un support de module (1) est équipé d'au moins un composant optoélectronique (2, 3), dans lequel le au moins un composant optoélectronique (2, 3) présente une surface optiquement active (4, 5),
dans lequel la surface optiquement active (4, 5) du composant optoélectronique est la partie luminescente de la surface d'un émetteur optique (2) ou la partie de la surface d'un récepteur optique (3) impliquée dans la conversion de lumière en un signal électrique,
dans lequel par application d'une couche au moins en partie opaque (8) au moins un diaphragme (6, 7) est formé sur des zones partielles de la surface optiquement active (4, 5) du composant optoélectronique (2, 3),
**caractérisé en ce**
**que** la position du au moins un diaphragme (6, 7) est orientée par rapport au support de module (1) et
**que** la couche au moins en partie opaque (8) s'étend sur un contact de connexion (11), qui est présent sur la surface optiquement active (4, 5), et s'étend au moins en partie sur un fil de connexion (12), qui est monté de manière électriquement en contact sur le contact de connexion (11).

2. Procédé selon la revendication 1,
**caractérisé en ce**
**que** la couche au moins en partie opaque (8) est appliquée par un procédé d'impression, de préférence par un procédé d'impression sans contact.

3. Procédé selon la revendication 1,
**caractérisé en ce**
**que** la couche au moins en partie opaque est appliquée par un processus lithographique, en particulier par un processus photolitographique.

4. Procédé selon l'une quelconque des revendications 1 à 3 ,
**caractérisé en ce**
**que** le support de module est équipé d'au moins un premier composant optoélectronique (2) et d'un deuxième composant optoélectronique (3),
dans lequel le premier composant optoélectronique (2) est un émetteur optique et le deuxième composant optoélectronique (3) un récepteur optique, en particulier pour la lumière émise par l'émetteur optique, et
**qu'**un diaphragme (6) est formé sur la surface optiquement active (4) de l'émetteur optique et/ou
**qu'**un diaphragme (7) est formé sur la surface optiquement active du récepteur.

5. Procédé selon la revendication 4,
**caractérisé en ce**
**que** respectivement des diaphragmes (6, 7) de même forme sont formés sur la surface optiquement active (4) de l'émetteur optique et la surface optiquement active du récepteur.

6. Procédé selon l'une quelconque des revendications 1 à 5,
**caractérisé en ce que**
selon lequel une couche au moins en partie opaque est appliquée également sur des zones (9, 10) à l'extérieur des surfaces optiquement actives des composants optoélectroniques (2, 3), de préférence sur des zones réflectrices de lumière.

7. Procédé selon l'une quelconque des revendications 1 à 6,
**caractérisé en ce que**
selon lequel la position du au moins un diaphragme (6, 7) est orientée par rapport aux bords extérieurs du support de module (1).

8. Procédé selon l'une quelconque des revendications 1 à 7,
**caractérisé en ce**
**que** le support de module (1) est une carte de circuits imprimés (1).

9. Module pour un capteur optoélectronique
avec un support de module (1), en particulier une carte de circuits imprimés, qui est équipée d'au moins un composant optoélectronique (2, 3), dans lequel le au moins un composant optoélectronique (2, 3) présente une surface optiquement active (4, 5),
dans lequel la surface optiquement active (4, 5) du composant optoélectronique est la partie luminescente de la surface d'un émetteur optique (2) ou la partie de la surface d'un récepteur optique (3) impliquée dans la conversion de lumière en un signal électrique,
dans lequel la au moins une surface optiquement active (4, 5) est cachée par endroits par une couche au moins en partie opaque (8) de telle sorte qu'au moins un diaphragme (6, 7) est formé par la couche au moins en partie opaque (8) sur la surface optiquement active,
**caractérisé en ce**
**que** la couche au moins en partie opaque (8) s'étend sur un contact de connexion (11), qui est présent sur la surface optiquement active (4, 5), et s'étend au moins en partie sur un fil de connexion (12), qui est monté de manière électriquement en contact sur le contact de connexion (11).

10. Module selon la revendication 9,
**caractérisé en ce**
**que** le support de module est équipé d'au moins un premier composant optoélectronique (2) et d'un deuxième composant optoélectronique (3), dans lequel le premier composant optoélectronique (2) est un émetteur optique et le deuxième composant optoélectronique (3) un récepteur optique, en particulier pour la lumière émise par l'émetteur optique, et
**qu'**un diaphragme (6) est formé sur la surface optiquement active (4) de l'émetteur optique et/ou
**qu'**un diaphragme (7) est formé sur la surface optiquement active du récepteur.

11. Module selon la revendication 10,
**caractérisé en ce**
**que** respectivement des diaphragmes (6, 7) de même forme présentent le premier composant optoélectronique (2) et le deuxième composant optoélectronique (3).

12. Module selon l'une quelconque des revendications 9 à 11,
**caractérisé en ce**
**que** des zones (9, 10) à l'extérieur des surfaces optiquement actives des composants optoélectroniques, de préférence des zones réflectrices de lumière, sont également recouvertes d'une couche au moins en partie opaque.

13. Capteur optoélectronique avec un module selon l'une quelconque des revendications 9 à 12.
